(19)

Europäisches
Patentamt
European
Patent Office
Office européen
des brevets

(11) **EP 1 378 088 B1**

(12) **EUROPEAN PATENT SPECIFICATION**

(45) Date of publication and mention
of the grant of the patent:
**04.07.2007 Bulletin 2007/27**

(21) Application number: **00993071.0**

(22) Date of filing: **20.12.2000**

(51) Int Cl.:
***H04L 1/06*** (2006.01)

(86) International application number:
**PCT/RU2000/000515**

(87) International publication number:
**WO 2002/052773 (04.07.2002 Gazette 2002/27)**

(54) **DIFFERENTIAL SPACE-TIME BLOCK CODING**

DIFFERENZIELLE RAUM-ZEITBLOCKCODIERUNG

CODAGE DIFFERENTIEL DE BLOCS SPATIO-TEMPORELS

(84) Designated Contracting States:
**AT BE CH CY DE DK ES FI FR GB GR IE IT LI LU MC NL PT SE TR**

(43) Date of publication of application:
**07.01.2004 Bulletin 2004/02**

(73) Proprietor: **Nortel Networks Limited
St.Laurent,
Québec H4S 2A9 (CA)**

(72) Inventors:
• **WANG, Rui, R.
deceased (JP)**
• **JIA, Ming
Ottawa, Ontario K2B 5P3 (CA)**
• **SHINAKOV, Youri S.
Moscow, 117574 (RU)**
• **CHLOMA, Alexandre M.
Moskovskaya obl., 140160 (RU)**
• **BAKOULINE, Mikhail G.
Moskovskaya obl., 142110 (RU)**
• **KREINDELINE, Vitali B.
Moscow, 109518 (RU)**

(74) Representative: **Ertl, Nicholas Justin
Elkington and Fife LLP,
Prospect House,
8 Pembroke Road
Sevenoaks,
Kent TN13 1XR (GB)**

(56) References cited:
• **HUGHES: "Differential space-time modulation" WCNC. IEEE WIRELESS COMMUNICATIONS AND NETWORKING CONFERENCE, XX, XX, 21 September 1999 (1999-09-21), pages 145-149, XP002170443**
• **HASSIBI B ET AL: "Codes for differential signaling with many antennas" 2000 IEEE WIRELESS COMMUNICATIONS AND NETWORKING CONFERENCE. CONFERENCE RECORD (CAT. NO.00TH8540), PROCEEDINGS OF IEEE CONFERENCE ON WIRELESS COMMUNICATIONS AND NETWORKING, CHICAGO, IL, USA, 23-28 SEPT. 2000, pages 23-24 vol.1, XP002174594 2000, Piscataway, NJ, USA, IEEE, USA ISBN: 0-7803-6596-8**
• **HOCHWALD B M ET AL: "Differential unitary space-time modulation" IEEE TRANSACTIONS ON COMMUNICATIONS, DEC. 2000, IEEE, USA, vol. 48, no. 12, pages 2041-2052, XP002174595 ISSN: 0090-6778**
• **HOCHWALD B M AND SWELDENS W: "Differential unitary space-time modulation" INTERNET ARTICLE, [Online] February 2000 (2000-02), XP002174597 Retrieved from the Internet: <URL:http://mars.bell-labs.com/cm/ms/ what/ mars/index.html> [retrieved on 2001-06-05]**
• **TAROKH V ET AL: "A DIFFERTIAL DETECTION SCHEME FOR TRANSMIT DIVERSITY" IEEE JOURNAL ON SELECTED AREAS IN COMMUNICATIONS, IEEE INC. NEW YORK, US, vol. 18, no. 7, July 2000 (2000-07), pages 1169-1174, XP000950217 ISSN: 0733-8716 cited in the application**

- TAROKH V ET AL: "Space-time codes for high data rate wireless communication: performance criterion and code construction" IEEE TRANSACTIONS ON INFORMATION THEORY, IEEE INC. NEW YORK, US, vol. 44, no. 2, 1 March 1998 (1998-03-01), pages 744-765, XP002089112 ISSN: 0018-9448

**Description**

This invention relates to differential space-time block coding, for example for a wireless communications system.

Background of the Invention

As is well known, wireless communications channels are subject to time-varying multipath fading, and it is relatively difficult to increase the quality, or decrease the effective error rate, of a multipath fading channel. While various techniques are known for mitigating the effects of multipath fading, several of these (e.g. increasing transmitter power or bandwidth) tend to be inconsistent with other requirements of a wireless communications system. One technique which has been found to be advantageous is antenna diversity, using two or more antennas (or signal polarizations) at a transmitter and/or at a receiver of the system.

In a cellular wireless communications system, each base station typically serves many remote (fixed or mobile) units and its characteristics (e.g. size and location) are more conducive to antenna diversity, so that it is desirable to implement antenna diversity at least at a base station, with or without antenna diversity at remote units. At least for communications from the base station in this case, this results in transmit diversity, i.e. a signal is transmitted from two or more transmit antennas.

S. M. Alamouti, "A Simple Transmit Diversity Technique for Wireless Communications", IEEE Journal on Selected Areas in Communications, Vol. 16, No. 8, pages 1451-1458, October 1998 describes a simple transmit diversity scheme using space-time coding (STBC). For the case of two transmit antennas, complex symbols s0 and -s1* are successively transmitted from one antenna and simultaneously complex symbols s1 and s0* are successively transmitted from the other antenna, where * represents the complex conjugate. These transmitted symbols constitute what is referred to as a space-time block.

A disadvantage of the STBC technique as described by Alamouti is that it requires estimation of the communications channel. While this can be done for example using pilot signal insertion and extraction, this is not desirable, for example because the pilot signal requires a significant proportion of the total transmitted power of the system.

V. Tarokh et al., "New Detection Schemes for Transmit Diversity with no Channel Estimation", IEEE International Conference on Universal Personal Communications, 1998, describes detection schemes for the STBC technique of Alamouti, in which effectively the channel is estimated from initially known transmitted symbols and from subsequent detected data symbols. However, this technique undesirably results in error propagation. This publication also notes that the technique of Alamouti has been generalized for more than two transmit antennas.

V. Tarokh et al., "A Differential Detection Scheme for Transmit Diversity", IEEE Journal on Selected Areas in Communications, Vol. 18, No. 7, pages 1169-1174, July 2000 describes a differential detection scheme for an STBC technique using two transmit antennas and one or more receive antennas, which does not require a channel estimate or pilot symbol transmission. As described on page 1171 and shown in Fig. 1 of this publication, for a $2^b$-PSK (phase shift keying), b = 1, 2, 3, ..., constellation the transmitter includes a bijective mapping M of blocks of 2b bits, from which a differential encoding produces symbols for transmission. The receiver includes an inverse mapping $M^{-1}$. While this scheme avoids the problem of error propagation, it is relatively complicated and hence more complex to implement, and its application is limited to only two transmit antennas. In this respect the publication states on page 1174: "It is a nontrivial task to extend the differential detection transmit diversity method described in this paper to n>2 transmit antennas.".

A need exists, therefore, to provide an improved method and coder for differential space-time block coding, and a corresponding method and decoder for decoding.

The article "Codes for differential signalling with many antennas" by Hassibi B et al, Proceedings of the 2000 IEEE Conference on Wireless Communications and Networking, pages 23-24, vol 1, XP002174594 discloses a differential space-time modulation technique that avoids the need for channel estimates.

The article "Differential unitary space-time modulation" by Hochwald B M et al, IEEE Transactions on Communications, Dec. 2000, vol. 48, no. 12, pages 2041-2052, XP002174595 discloses a similar differential modulation framework for multiple antennas across a fading channel.

The article "Differential unitary space-time modulation" by Hochwald B M et al, XP002174597 discloses further details of the differential space-time modulation technique.

Summary of the Invention

According to one aspect, this invention provides a method of differential space-time block coding comprising the steps of: producing, from symbols to be encoded, successive space-time blocks $H_x(X_i)$ each of T symbols in successive symbol intervals on each of T paths in accordance with a T by T orthogonal matrix $H_x$, where T is an integer greater than one, $X_i$ represents the symbols to be encoded in a space-time block, and i is an integer identifying each space-time block; producing differentially encoded space-time output blocks $H_{z,i}$ each of T symbols in successive symbol intervals on each of T output paths; and delaying the differentially encoded space-time output blocks $H_{z,i}$ to produce respective delayed blocks $H_{z,i-1}$; each differentially encoded space-time output block $H_{z,i}$ being produced by matrix multiplication of the block $H_x(X_i)$ by the delayed block $H_{z,i-1}$.

For example, in one embodiment of the invention described below T=2 and two symbols are encoded in each space-time block. In another embodiment of the invention described below T=4 and three symbols are encoded in each space-time block. Preferably in each case the step of producing the successive space-time blocks $H_x(X_i)$ comprises a multiplication of the symbols to be encoded by a normalization factor. Conveniently the symbols to be encoded comprise M-ary phase shift keying symbols, where M is an integer greater than one.

Another aspect of the invention provides a differential space-time block coder comprising: a space-time block coder responsive to symbols to be encoded to produce successive space-time coded blocks; a matrix multiplier having a first input for said successive space-time coded blocks, a second input, and an output providing differentially encoded space-time blocks; and a delay unit for supplying each differentially encoded space-time block from the output of the matrix multiplier to the second input of the matrix multiplier with a delay of one space-time block; the matrix multiplier multiplying each space-time coded block by an immediately preceding differentially encoded space-time block to produce a current differentially encoded space-time block.

The invention also provides a method of decoding symbols received in respective symbol intervals in response to transmission from T antennas of differentially encoded space-time blocks produced by the method recited above, comprising the steps of: providing T received symbols of each encoded space-time block; and producing decoded symbols $\hat{X}_i$ in accordance with: $Y_i = kH_x(\hat{X}_i)Y_{i-1}$ where $Y_i$ is a vector of T symbols of a current encoded space-time block i, $Y_{i-1}$ is a vector of T symbols of an immediately preceding encoded space-time block i-1, i is an integer, k is a scaling constant, and $H_x$ is the T by T orthogonal space-time block coding matrix.

The invention further provides a decoder for decoding symbols received in respective symbol intervals in response to transmission of differentially encoded space-time blocks produced by the coder recited above, comprising: means for providing received symbols of each encoded space-time block i represented by a vector $Y_i$; a delay unit for providing a delay of one space-time block to provide received symbols of an immediately preceding encoded space-time block i-1 represented by a vector $Y_{i-1}$; and means for producing decoded symbols $\hat{X}_i$ in accordance with an equation: $Y_i=kH_x(\hat{X}_i)Y_{i-1}$ where k is a scaling constant and $H_x$ is an orthogonal matrix representing space-time block coding by the coder.

Brief Description of the Drawings

The invention will be further understood from the following description with reference to the accompanying drawings, in which by way of example:

Fig. 1 illustrates parts of a known space-time block code (STBC) transmitter;

Fig. 2 illustrates parts of a corresponding known receiver;

Fig. 3 illustrates parts of a known STBC transmitter using mapping and differential encoding;

Fig. 4 illustrates parts of an STBC transmitter using differential encoding in accordance with an embodiment of the invention; and

Fig. 5 illustrates parts of a corresponding receiver in accordance with an embodiment of the invention.

Detailed Description

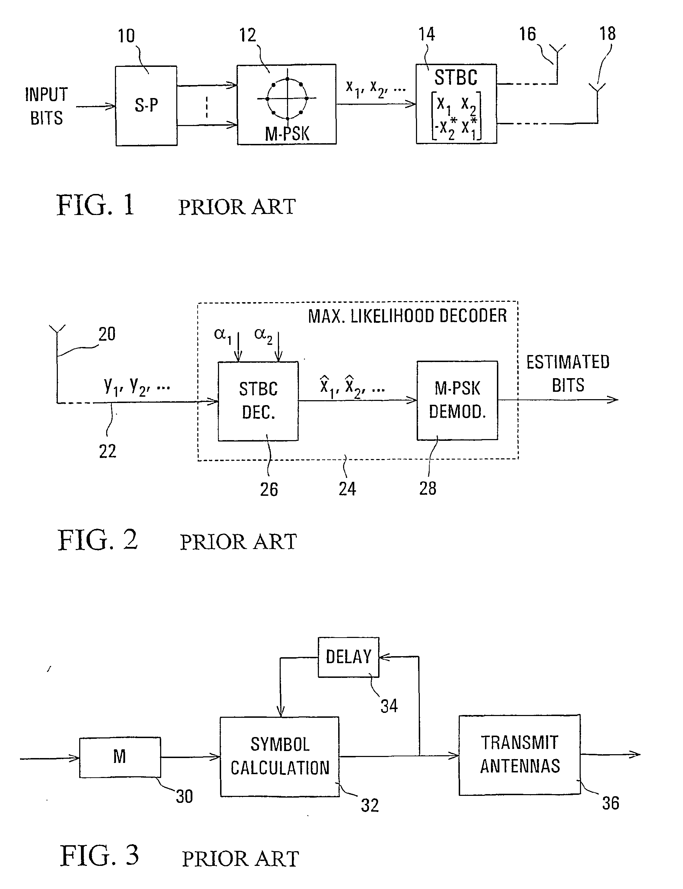

Referring to the drawings, Fig. 1 illustrates parts of a known space-time block code (STBC) transmitter, and Fig. 2 illustrates parts of a corresponding known receiver. For simplicity and clarity, these and the other figures of the drawings show only those parts of the transmitter and receiver necessary for a full understanding of the prior art and embodiments of this invention, and the same references are used in different figures to denote similar elements.

The transmitter of Fig. 1 includes a serial-to-parallel (S-P) converter 10, an M-PSK (M-ary phase shift keying) modulator or mapping function 12, and a space-time block coder (STBC) 14 providing outputs, via transmitter functions such as up-converters and power amplifiers not shown but represented in Fig. 1 by dashed lines, to at least two antennas 16 and 18 which provide transmit diversity. The S-P converter 10 is supplied with input bits of information to be communicated and produces output bits on two or more parallel lines to the M-PSK mapping function 12, which produces from the parallel bits sequential M-PSK symbols $x_1$, $x_2$, ....

For example, the mapping function 12 may provide a Gray code mapping of in each case 3 input bits from the S-P converter 10 to respective ones of M=8 signal points of an 8-PSK signal point constellation. Generally, it can be appreciated that the mapping function 12 can provide any desired mapping of one or more input bits to a signal point constellation with any appropriate and desired number M of equal-energy phase states; for example M=2 (for which the S-P converter 10 is not required), 4, or 8.

The symbols $x_1$, $x_2$, ..., represented by complex numbers, are supplied to the STBC 14, which for simplicity is shown in Fig. 1 as having two outputs for the respective transmit antennas 16 and 18, but may instead have more than two outputs for a corresponding larger number of transmit antennas. For the case of two antennas as shown, the STBC 14 forms a space-time block of symbols, as represented in Fig. 1, from each successive pair of symbols $x_1$ and $x_2$ supplied to its input.

More particularly, the STBC function is represented by a T-by-T orthogonal matrix $H_x$, where T is the number of transmit antennas and hence symbol outputs of the STBC 14. For the case of T=2 as represented in Fig. 1,

$$H_x\left(x_1, x_2\right) = \begin{bmatrix} x_1 & x_2 \\ -x_2{}^* & x_1{}^* \end{bmatrix}$$

In accordance with this matrix $H_x$, for each pair of PSK symbols $x_1$ and $x_2$ supplied to the input of the STBC 14, in a first symbol interval the antenna 16 is supplied with the symbol $x_1$ and the second antenna 18 is supplied with the symbol $x_2$, and in a second symbol interval the first antenna 16 is supplied with the symbol $-x_2{}^*$ and the second antenna 18 is supplied with the symbol $x_1{}^*$, where * denotes the complex conjugate. Thus both PSK symbols in each pair are transmitted twice in different forms, from different antennas and at different times to provide both space and time diversity. It can be seen that each column of the matrix $H_x$ indicates the symbols transmitted in successive intervals from a respective antenna, and each row represents a respective symbol transmission interval.

Identifying each pair of symbols $x_1$ and $x_2$ with an additional integer i representing a symbol pair number (or, equivalently, time), i.e. as a respective pair of symbols $x_{1,i}$ and $x_{2,i}$ or equivalently as $X_i$, the matrix $H_x$ can be more generally expressed as:

$$H_x\left(X_i\right) = H_x\left(x_{1,i}, x_{2,i}\right) = \begin{bmatrix} x_{1,i} & x_{2,i} \\ -x_{2,i}{}^* & x_{1,i}{}^* \end{bmatrix}.$$

The space-time blocks transmitted from the antennas 16 and 18 are received by an antenna 20 of the receiver shown in Fig. 2, producing received symbols $y_1$, $y_2$, ..., again represented by complex numbers, on a receive path 22. Pairs of these received symbols, $y_{1,i}$ and $y_{2,i}$, alternatively represented as $Y_i$, are supplied to a maximum likelihood decoder 24, shown within a dashed line box in Fig. 2. The decoder 24 comprises an STBC decoder 26 and an M-PSK demodulator 28. The STBC decoder 26 is supplied with the paired symbols $Y_i$ and also with channel estimates $\alpha_1$ and $\alpha_2$, and produces estimates $x_1$, $x_2$, ... of the transmitted PSK symbols $x_1$, $x_2$, ... respectively (the caret symbol ^ denoting an estimate). These estimates are supplied to the M-PSK demodulator 28, which produces estimates of the original input bits.

The channel estimates $\alpha_1$ and $\alpha_2$ represent channel parameters or gains (amplitude and phase) of the channels from the transmit antennas 16 and 18, respectively, to the receive antenna 20, and are reasonably assumed to be constant over the duration of each space-time block. The channel estimates can be produced in any desired known manner, for example using pilot symbols also communicated from the transmitter to the receiver via the same channels.

If $A_i = \begin{bmatrix} \alpha_{1,i} \\ \alpha_{2,i} \end{bmatrix}$ is a vector of the channel estimates for the respective space-time block i then, excluding noise and interference, it can be seen that:

$$Y_i = \begin{bmatrix} y_{1,i} \\ y_{2,i} \end{bmatrix} = H_x\left(x_{1,i}, x_{2,i}\right) A_i = \begin{bmatrix} x_{1,i} & x_{2,i} \\ -x_{2,i}{}^* & x_{1,i}{}^* \end{bmatrix} \begin{bmatrix} \alpha_{1,i} \\ \alpha_{2,i} \end{bmatrix}, \quad i = 1, 2, \ldots \qquad (1)$$

Introducing a converted vector $\widetilde{Y}_i = \begin{bmatrix} Y_{1,i} \\ -Y_{2,i}{}^* \end{bmatrix}$, it can be determined as shown in the publication by Alamouti that:

$$\hat{X}_i = \begin{bmatrix} \hat{x}_{1,i} \\ \hat{x}_{2,i} \end{bmatrix} = H_\alpha\left(\alpha_{1,i}, \alpha_{2,i}\right)' \widetilde{Y}_i = \left(\left|\alpha_{1,i}\right|^2 + \left|\alpha_{2,i}\right|^2\right) X_i$$

where the matrix $H_\alpha(\alpha_{1,i}, \alpha_{2,i})'$ is the conjugate transpose of the matrix $H_\alpha(\alpha_{1,i}, \alpha_{2,i})$. As the part $(|\alpha_{1,i}|^2 + |\alpha_{2,i}|^2)$ is real, it does not change the phases of the M-PSK symbols, which accordingly can be decoded to the information bits by a look-up table operation.

As discussed above, the Alamouti publication extends this transmit diversity arrangement also to the case of more than one receive antenna, and this arrangement has also been extended for the case of more than two transmit antennas. Such known arrangements provide advantages of simplicity and diversity, but have the disadvantage of requiring channel estimation.

Fig. 3 illustrates parts of an STBC transmitter as proposed by Tarokh et al. in the publication referred to above entitled "A Differential Detection Scheme for Transmit Diversity". This scheme avoids the disadvantage of requiring channel estimation as in the arrangement of Figs. 1 and 2 described above, and is also intended to avoid error propagation which occurs in a scheme such as that proposed by Tarokh et al. in the publication referred to above entitled "New Detection Schemes for Transmit Diversity with no Channel Estimation".

Referring to Fig. 3, the transmitter comprises a mapping function 30, a differential symbol calculation block 32, a delay 34, and two transmit antennas represented by a block 36. As described by Tarokh et al., for a $2^b$-PSK, b=1, 2, ..., signal point constellation the transmitter uses the mapping M of the function 30 on an input block of 2b bits $B_{2t+1}$ and computes $M(B_{2t+1}) = (A(B_{2t+1})\ B(B_{2t+1}))$ where A and B are explained in part III.A on page 1171 of the publication. The transmitter then uses the delay 34 and the calculation block 32 to compute $(s_{2t+1}\ s_{2t+2}) = A\ (B_{2t+1})\ (s_{2t-1}\ s_{2t}) + B(B_{2t+1})$ $(-s_{2t}{}^*\ s_{2t-1}{}^*)$, sends $s_{2t+1}$ and $s_{2t+2}$ from the first and second transmit antennas respectively at time 2t+1, and sends $-s_{2t+2}{}^*$ and $s_{2t+1}{}^*$ from the first and second transmit antennas respectively at time 2t+2. This mapping, differential computation, and space-time block code transmission is repeated for subsequent blocks each of 2b bits, with the first two symbols of a transmission sequence providing a differential encoding reference and not conveying any information.

While the transmitter of Fig. 3 avoids the need for channel estimation and avoids the problem of error propagation, it introduces calculations which undesirably complicate the transmitter, and this scheme is limited in its application to the case of only two transmit antennas, as recognized in the publication. Thus this scheme has limited application and an undesirably complex implementation.

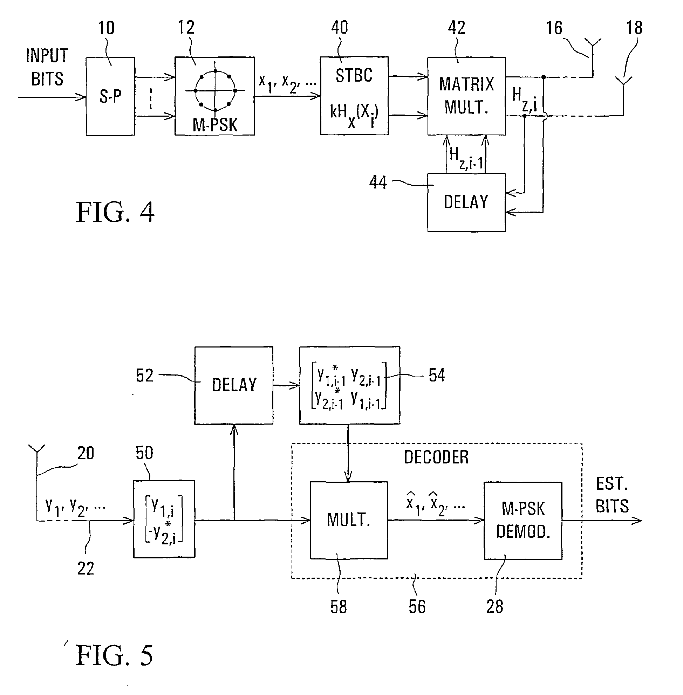

Fig. 4 illustrates parts of a two-antenna STBC transmitter using differential encoding in accordance with an embodiment of this invention. Like the transmitter of Fig. 1 described above, this includes an S-P converter 10 to which input bits are supplied, whose output bits are supplied to an M-PSK mapping function 12 which produces sequential M-PSK symbols $x_1$, $x_2$, ... represented by complex numbers. Also as described above with reference to Fig. 1, pairs $x_{1,i}$ and $x_{2,i}$, or $X_i$, of these symbols are supplied to an STBC function 40, which forms the 2 by 2 orthogonal STBC matrix $H_x(X_i)$ as described above, in this case scaled by a predetermined normalizing factor k as described further below.

The output of the STBC function 40 is supplied to one input of a matrix multiplier 42, an output of which constitutes an STBC matrix $H_{z,i}$ as described below and is supplied to the two transmit antennas 16 and 18 to be transmitted in a similar manner to that described with reference to Fig. 1 for the matrix $H_x(X_i)$. The matrix $H_{z,i}$ is also supplied to an input of a delay unit 44, an output matrix $H_{z,i-1}$ of which is supplied to another input of the matrix multiplier 42.

Representing the matrix $H_{z,i}$ in a similar manner to that used for the matrix $H_x(X_i)$, i.e. as comprising a pair of symbols $z_{1,i}$ and $z_{2,i}$, then for a symbol pair i the matrix $H_{z,i}$ is given by:

$$H_{z,i} = H_z\left(z_{1,i}, z_{2,i}\right) = \begin{bmatrix} z_{1,i} & z_{2,i} \\ -z_{2,i}{}^* & z_{1,i}{}^* \end{bmatrix}$$

the components of which are transmitted by the two antennas 16 and 18 as a space-time block.

It can be seen that the functions 40 to 44 of the transmitter of Fig. 4 constitute an STBC encoder having the encoder equation:

$$H_{z,i} = kH_x\left(X_i\right)H_{z,i-1} \; .$$

In other words, each space-time block $H_{z,i}$ transmitted by the antennas 16 and 18 is equal to the normalized matrix $kH_x$ ($X_i$) produced by the function 40 multiplied in the matrix multiplier 42 by the matrix $H_{z,i-1}$ of the previously transmitted space-time block, the latter being fed back to the multiplier 42 via the delay 44 (which provides a delay corresponding to one space-time block, i.e. two symbols in this case).

In more detail, it can be seen that:

$$kH_x\left(x_{1,i}, x_{2,i}\right)H_z\left(z_{1,i-1}, z_{2,i-1}\right) = k\begin{bmatrix} x_{1,i} & x_{2,i} \\ -x_{2,i}{}^* & x_{1,i}{}^* \end{bmatrix}\begin{bmatrix} z_{1,i-1} & z_{2,i-1} \\ -z_{2,i-1}{}^* & z_{1,i-1}{}^* \end{bmatrix}$$

$$= k\begin{bmatrix} x_{1,i}z_{1,i-1} - x_{2,i}z_{2,i-1}{}^* & x_{1,i}z_{2,i-1} + x_{2,i}z_{1,i-1}{}^* \\ -x_{2,i}{}^*z_{1,i-1} - x_{1,i}{}^*z_{2,i-1}{}^* & -x_{2,i}{}^*z_{2,i-1} + x_{1,i}{}^*z_{1,i-1}{}^* \end{bmatrix}$$

$$= \begin{bmatrix} z_{1,i} & z_{2,i} \\ -z_{2,i}{}^* & z_{1,i}{}^* \end{bmatrix} = H_z\left(z_{1,i}, z_{2,i}\right)$$

where $z_{1,i} \equiv k(x_{1,i}z_{1,i-1}-x_{2,i}z_{2,i-1}{}^*)$ and $z_{2,i} \equiv k(x_{1,i}z_{2,i-1}+x_{2,i}z_{1,i-1}{}^*)$. With $|x_{1,i}|^2=|x_{2,i}|^2=1$ and $k=1/\sqrt{2}$, the matrix $H_{z,i}$ has the same properties as the matrix $H_{z,i-1}$ and these successive matrices can each be transmitted as a space-time block as described above.

The space-time blocks transmitted from the antennas 16 and 18 as described above with reference to Fig. 4 result in the receiver receiving symbols $y_1$, $y_2$, ... which are paired and represented by $Y_i$ as described above. Again representing the channel parameters by the vector $A_i$ corresponding to the channel estimates discussed above, the received signal has the form:

$$Y_i = H_z\left(z_{1,i}, z_{2,i}\right)A_i = kH_x\left(x_{1,i}, x_{2,i}\right)H_z\left(z_{1,i-1}, z_{2,i-1}\right)A_i \; .$$

As the last two terms of this equation are approximately the same as the preceding received symbol pair $Y_{i-1}$, it can be seen that:

$$Y_i \cong kH_x\left(x_{1,i}, x_{2,i}\right)Y_{i-1} = kH_x\left(X_i\right)Y_{i-1} , \qquad (2)$$

this approximation being based on the reasonable assumption that the channel parameters do not change significantly between two consecutive space-time blocks.

It can be appreciated that this equation (2) has a similar form to that of equation (1) above, except that the channel parameter vector $A_i$ of equation (1) is replaced in equation (2) by $kY_{i-1}$. With this replacement, an arrangement for detecting the transmitted information can correspond to that described above with reference to Fig. 2. Thus the decoding process, the task of which is to solve the above equation (2), is in this case given by:

$$\hat{X}_i = \begin{bmatrix} \hat{x}_{1,i} \\ \hat{x}_{2,i} \end{bmatrix} = H\left(y_{1,i-1}, y_{2,i-1}\right)' \widetilde{Y}_i = \begin{bmatrix} y_{1,i-1}{}^* & -y_{2,i-1} \\ y_{2,i-1}{}^* & y_{1,i-1} \end{bmatrix}\begin{bmatrix} y_{1,i} \\ -y_{2,i}{}^* \end{bmatrix} \qquad (3)$$

where the converted vector $\widetilde{Y}_i = \begin{bmatrix} Y_{1,i} \\ -Y_{2,i}{}^* \end{bmatrix}$ and the matrix $H(y_{1,i-1}, y_{2,i-1})'$ is the conjugate transpose of the matrix

$H(y_{1,i-1}, y_{2,i-1})$.

It can be seen from the above equations that with the encoding provided by the transmitter of Fig. 4, the received symbol pair $Y_i$ is dependent only upon the normalization factor k which is predetermined and constant, the current space-time block code matrix $H_x(X_i)$, and the immediately preceding received symbol pair $Y_{i-1}$. The decoding of the received symbol pair $Y_i$ to produce the estimated decoded symbol $\hat{X}_i$ is not dependent upon the channel parameter vector $A_i$, which is therefore not required to be estimated in order for the receiver to recover the transmitted information. In addition, it can be appreciated that there is differential coding: the estimated decoded symbol $\hat{X}_i$ depends on the current received symbol pair $Y_i$ and the immediately preceding received symbol pair $Y_{i-1}$, and error propagation in the decoded information is avoided because the decoding of each received symbol pair $Y_i$ is not dependent upon previously decoded information.

Fig. 5 illustrates parts of a corresponding receiver in which, as in the known receiver of Fig. 2, the space-time blocks transmitted from the antennas 16 and 18 of the transmitter of Fig. 4 are received by the antenna 20 to produce received symbols $y_1$, $y_2$, ... on the receive path 22. From pairs of these received symbols, $y_{1,i}$ and $y_{2,i}$, or $Y_i$, the converted

vector $\widetilde{Y}_i = \begin{bmatrix} Y_{1,i} \\ -Y_{2,i}{}^* \end{bmatrix}$ is produced by a unit 50 and, via a delay unit 52, the matrix

$H\left(y_{1,i-1}, y_{2,i-1}\right)' = \begin{bmatrix} Y_{1,i-1}{}^* & -Y_{2,i-1} \\ Y_{2,i-1}{}^* & Y_{1,i-1} \end{bmatrix}$ is produced by a unit 54. In a decoder 56, shown within a dashed line box in Fig. 5, the outputs of the units 50 and 54 are supplied to a multiplier 58 which performs the multiplication of Equation (3) above, thereby producing the estimates $\hat{x}_1$, $\hat{x}_2$, ... of the transmitted PSK symbols $x_1$, $x_2$, ... respectively. As in the receiver of Fig. 2, these estimates are supplied to the M-PSK demodulator 28, which produces estimates of the original input bits. It can be appreciated that the decoder 56 does not use the channel parameter vector $A_i$, so that it does not require and is not dependent upon channel estimation, and that the decoder produces the estimates of the transmitted PSK symbols from two consecutively received signal blocks, so that there is no error propagation.

Although the transmitter of Fig. 4 and the receiver of Fig. 5 are described above in the context of the transmitter having two antennas and the receiver having one antenna, it can be appreciated that embodiments of the invention are not limited to this case. The receiver may instead have two or more antennas signals from which are combined in a desired and appropriate manner, for example using maximal ratio combining. In addition, the transmitter may have more than two antennas, the STBC matrix $H_x(X_i)$ still being a T by T orthogonal matrix where T is the number of transmit antennas. By way of example, the following description relates to the case of T=4, i.e. the transmitter has four antennas and the STBC matrix $H_x(X_i)$ is required to be a 4 by 4 orthogonal matrix.

As no STBC 4 by 4 orthogonal matrix has been determined for a code rate of 1 (i.e. with 4 sequential M-PSK symbols $x_1$, $x_2$, $x_3$, and $x_4$ incorporated into the matrix), a lower coding rate can be used. For example, with a 3/4 code rate the 4 by 4 orthogonal matrix is derived from only 3 sequential M-PSK symbols $x_1$, $x_2$, and $x_3$. The STBC matrix $H_x(X_i)$ can then be, for example, the matrix:

$$H_x\left(x_1, x_2, x_3\right) = \begin{bmatrix} x_1 & x_2 & \dfrac{x_3}{\sqrt{2}} & \dfrac{x_3}{\sqrt{2}} \\ -x_2{}^* & x_1{}^* & \dfrac{x_3}{\sqrt{2}} & \dfrac{x_3}{\sqrt{2}} \\ \dfrac{x_3{}^*}{\sqrt{2}} & \dfrac{x_3{}^*}{\sqrt{2}} & \dfrac{\left(-x_1 - x_1{}^* + x_2 - x_2{}^*\right)}{2} & \dfrac{\left(x_1 - x_1{}^* - x_2 - x_2{}^*\right)}{2} \\ \dfrac{x_3{}^*}{\sqrt{2}} & \dfrac{x_3{}^*}{\sqrt{2}} & \dfrac{\left(x_1 - x_1{}^* + x_2 + x_2{}^*\right)}{2} & \dfrac{\left(-x_1 - x_1{}^* - x_2 + x_2{}^*\right)}{2} \end{bmatrix}$$

which is orthogonal, i.e.:

$$H_x(X_1)'H_x(X_1)=\left(|x_1|^2+|x_2|^2+|x_3|^2\right)I$$

where I is the identity matrix. The normalization factor k for this matrix is $1/\sqrt{3}$.

Except for the provision of four transmit antennas instead of two, modification of the STBC coder 40 in accordance with the 4 by 4 matrix as described above, and corresponding increases in the numbers of inputs and outputs of the units 40 to 44, the transmitter for this example can be the same as described above with reference to Fig. 4.

In the corresponding receiver, the task of the decoder is again to solve the equation:

$$Y_i \cong kH_x(X_i)Y_{i-1}$$

corresponding to equation (2) above, where in this case each of the vectors $Y_i$ and $Y_{i-1}$ has four elements and the matrix $H_x(X_i)$ is a four by four matrix, so that this equation represents a set of four linear simultaneous equations. The receiver can have a generally similar form to that described above with reference to Fig. 5, except that the units 50 and 54 and the multiplier 58 are replaced by units for providing an explicit solution to this decoder equation. It can be seen that the size of the set of linear simultaneous equations represented by this decoder equation corresponds to the number T of transmit antennas and the corresponding size of the space-time block, and that an explicit solution to this equation can always be found regardless of the number T of transmit antennas.

By way of further explanation and example, the 4 by 4 orthogonal matrix STBC arrangement described above may be used with QPSK (i.e. M=4) modulation and Gray coding, the QPSK symbols being represented in the form:

$$x_m = \left(\theta_{m,r}+\theta_{m,j}\right)/\sqrt{2}$$

where m=1, 2, 3 and $\theta_r$ and $\theta_j$ denote real and imaginary phase components of respective symbols. Consequently, the STBC matrix $H_x(x_1, x_2, x_3)$ can be described in the form:

$$H_x(x_1,x_2,x_3)=\left(M_{1,r}\theta_{1,r}+M_{1,j}\theta_{1,j}+M_{2,r}\theta_{2,r}+M_{2,j}\theta_{2,j}+M_{3,r}\theta_{3,r}+M_{3,j}\theta_{3,j}\right)/\sqrt{2}$$

where:

$$M_{1,r}=\begin{bmatrix}1&0&0&0\\0&1&0&0\\0&0&-1&0\\0&0&0&-1\end{bmatrix},\quad M_{1,j}=\begin{bmatrix}j&0&0&0\\0&-j&0&0\\0&0&0&j\\0&0&j&0\end{bmatrix},$$

$$M_{2,r}=\begin{bmatrix}0&1&0&0\\-1&0&0&0\\0&0&0&-1\\0&0&1&0\end{bmatrix}$$

$$M_{2,j} = \begin{bmatrix} 0 & j & 0 & 0 \\ j & 0 & 0 & 0 \\ 0 & 0 & j & 0 \\ 0 & 0 & 0 & -j \end{bmatrix}, \qquad M_{3,r} = \frac{1}{\sqrt{2}} \begin{bmatrix} 0 & 0 & 1 & 1 \\ 0 & 0 & 1 & -1 \\ 1 & 1 & 0 & 0 \\ 1 & -1 & 0 & 0 \end{bmatrix},$$

$$M_{3,j} = \frac{1}{\sqrt{2}} \begin{bmatrix} 0 & 0 & j & j \\ 0 & 0 & j & -j \\ -j & -j & 0 & 0 \\ -j & j & 0 & 0 \end{bmatrix}.$$

The corresponding decoding algorithm is described by the equations:

$$\theta_{m,r} = \mathrm{sign}\left(\mathrm{real}\left(Y_i' \, M_{m,r} \, Y_{i-1}\right)\right), \quad \theta_{m,j} = \mathrm{sign}\left(\mathrm{real}\left(Y_i' \, M_{m,j} \, Y_{i-1}\right)\right), \quad m = 1,2,3$$

Simulations of transmitter and receiver arrangements in accordance with embodiments of the invention for example as described above have shown that these provide a desired performance in terms of bit error rate (BER) and frame error rate (FER), these being 3dB below those of a space-time block coding arrangement with perfect channel estimation. It can be appreciated that the latter is a theoretical ideal which can not be realized, that in practice channel estimation errors occur which can cause large performance degradation to known STBC systems, and that also in such systems a significant part of the resources are required for the pilot channel or symbols used for synchronization and channel estimation. Accordingly, it is possible for arrangements in accordance with the invention to provide a better BER performance than practical STBC systems using channel estimation, as well as providing a solution which can be easily implemented in the transmitter and the receiver and which is applicable to transmitters with different numbers of transmit antennas.

It can also be appreciated that the performance of a system incorporating an arrangement in accordance with the invention can be further improved by concatenating differential STBC coding described above with a channel encoder, which may for example comprise a turbo coder of known form. For example in this case in the transmitter the input bits supplied serially to the S-P converter 10 or in parallel to the input of the M-PSK mapping function 12 may be derived, for example via a block interleaver of known form, from the output of a turbo coder also of known form. In the receiver, correspondingly the estimated bits output from the decoder 56 can comprise soft values (probabilities or probability ratios) which are supplied, for example via a block deinterleaver of known form, to a channel decoder also of known form. Concatenation of turbo and STBC coding is known for example from G. Bauch, "Concatenation of Space-Time Block Codes and "Turbo"-TCM", Proceedings of the International Conference on Communications, ICC'99, pages 1202-1206, June 1999.

Although particular embodiments of the invention are described in detail above, it can be appreciated that these and numerous other modifications, variations, and adaptations may be made within the scope of the invention as defined in the claims.

## Claims

1. A method of differential space-time block coding comprising the steps of:

(40) producing, from symbols to be encoded, successive space-time blocks $H_x(X_i)$ each of T symbols in successive symbol intervals on each of T paths in accordance with a T by T orthogonal matrix $H_x$, where T is an integer greater than one, $X_i$ represents the symbols to be encoded in a space-time block, and i is an integer identifying each space-time block;

(42) producing differentially encoded space-time output blocks $H_{z,i}$ each of T symbols in successive symbol intervals on each of T output paths; and

(44) delaying the differentially encoded space-time output blocks $H_{z,i}$ to produce respective delayed blocks $H_{z,i-1}$;

each differentially encoded space-time output block $H_{z,i}$ being produced by matrix multiplication (42) of the block $H_x(X_i)$ by the delayed block $H_{z,i-1}$.

2. A method as claimed in claim 1 wherein T=2 and two symbols are encoded in each space-time block.

3. A method as claimed in claim 1 wherein T=4 and three symbols are encoded in each space-time block.

4. A method as claimed in any of claims 1 to 3 wherein the step of (42) producing the successive space-time blocks $H_x(X_i)$ comprises a multiplication of the symbols to be encoded by a normalization factor.

5. A method as claimed in any of claims 1 to 4 wherein the symbols to be encoded comprise M-ary phase shift keying symbols, where M is an integer greater than one.

6. A differential space-time block coder comprising:

a space-time block coder (40) responsive to symbols to be encoded to produce successive space-time coded blocks ;
a matrix multiplier (42) having a first input for said successive space-time coded blocks, a second input, and an output providing differentially encoded space-time blocks; and
a delay unit (44) for supplying each differentially encoded space-time block from the output of the matrix multiplier to the second input of the matrix multiplier with a delay of one space-time block;
the matrix multiplier (42) multiplying each space-time coded block by an immediately preceding differentially encoded space-time block to produce a current differentially encoded space-time block.

7. A coder as claimed in claim 6 wherein the space-time block coder (40) is arranged to produce each space-time coded block with two symbols in successive symbol intervals on each of two paths, in response to two symbols to be encoded.

8. A coder as claimed in claim 6 wherein the space-time block coder (40) is arranged to produce each space-time coded block with four symbols in successive symbol intervals on each of four paths, in response to three symbols to be encoded.

9. A coder as claimed in any of claims 6 to 8 wherein the space-time block coder (40) is arranged to multiply the symbols to be encoded by a normalization factor.

10. A coder as claimed in any of claims 6 to 9 and further comprising an M-ary phase shift keying function (12), where M is an integer greater than one, arranged to produce the symbols to be encoded.

11. A method of decoding symbols received in respective symbol intervals in response to transmission from T antennas of differentially encoded space-time blocks produced by the method of claim 1, comprising the steps of:

(54) providing T received symbols of each encoded space-time block; and
(58) producing decoded symbols $\hat{X}_i$ in accordance with:

$$Y_i = kH_x\left(\hat{X}_i\right)Y_{i-1}$$

where $Y_i$ is a vector of T symbols of a current encoded space-time block i, $Y_{i-1}$ is a vector of T symbols of an immediately preceding encoded space-time block i-1, i is an integer, k is a scaling constant, and $H_x$ is the T by T orthogonal space-time block coding matrix.

12. A method as claimed in claim 11 wherein T=2, $y_{1,i}$ and $y_{2,i}$ are received symbols of the encoded space-time block i, and the step of producing the decoded symbols $\hat{X}_i$ comprises multiplying (58) a matrix

$$H\left(y_{1,i-1}, y_{2,i-1}\right)' = \begin{bmatrix} y_{1,i-1}{}^* & -y_{2,i-1} \\ y_{2,i-1}{}^* & y_{1,i-1} \end{bmatrix} \text{ by a vector } \tilde{Y}_i = \begin{bmatrix} y_{1,i} \\ -y_{2,i}{}^* \end{bmatrix}.$$

**13.** A decoder for decoding symbols received in respective symbol intervals in response to transmission of differentially encoded space-time blocks produced by the coder of claim 6, comprising:

means (50) for providing received symbols of each encoded space-time block i represented by a vector $Y_i$;

a delay unit (52) for providing a delay of one space-time block to provide received symbols of an immediately preceding encoded space-time block i-1 represented by a vector $Y_{i-1}$; and

means (54,58) for producing decoded symbols $\hat{X}_i$ in accordance with an equation:

$$Y_i = kH_z\left(\hat{X}_i\right)Y_{i-1}$$

where k is a scaling constant and $H_x$ is an orthogonal matrix representing space-time block coding by the coder.

**14.** A decoder as claimed in claim 13 wherein the means for producing the decoded symbols $\hat{X}_i$ comprises a multiplier (58) arranged to multiply a matrix $\begin{bmatrix} y_{1,i-1}* & -y_{2,i-1} \\ y_{2,i-1}* & y_{1,i-1} \end{bmatrix}$ by a vector $\begin{bmatrix} y_{1,i} \\ -y_{2,i}* \end{bmatrix}$, where $y_{1,i}$ and $y_{2,i}$ are the received symbols of the encoded space-time block i.

**Patentansprüche**

**1.** Verfahren zur differenziellen Raum-Zeit-Block-Codierung mit den folgenden Schritten:

Erzeugen (40), aus zu codierenden Symbolen, aufeinanderfolgender Raum-Zeit-Blöcke $H_x(X_i)$ jeweils von T Symbolen in aufeinanderfolgenden Symbol-Intervallen auf jedem von T Pfaden entsprechend einer orthogonalen T mal T-Matrix $H_x$, worin T eine ganze Zahl größer als eins ist, $X_i$ die in einem Raum-Zeit-Block zu codierenden Symbole darstellt, und i eine ganze Zahl ist, die jeden Raum-Zeit-Block identifiziert;

Erzeugen (42) von differenziell codierten Raum-Zeit-Ausgangsblöcken $H_{z,i}$ von jeweils T Symbolen in aufeinander folgenden Symbol-Intervallen an jedem von T Ausgangspfaden; und

Verzögern (44) der differenziell codierten Raum-Zeit-Ausgangsblöcke $H_{z,i}$ zur Erzeugung jeweiliger verzögerter Blöcke $H_{z,i-1}$,

wobei jeder differenziell codierte Raum-Zeit-Ausgangsblock $H_{z,i}$ durch eine Matrix-Multiplikation (42) des Blockes $H_x(X_i)$ mit dem verzögerten Block $H_{z,i-1}$ erzeugt wird.

**2.** Verfahren nach Anspruch 1, bei dem T=2 ist und zwei Symbole in jedem Raum-Zeit-Block codiert werden.

**3.** Verfahren nach Anspruch 1, bei dem T=4 ist und drei Symbole in jedem Raum-Zeit-Block codiert werden.

**4.** Verfahren nach einem der Ansprüche 1 bis 3, bei dem der Schritt des Erzeugens (42) der aufeinanderfolgenden Raum-Zeit-Blöcke $H_x(X_i)$ eine Multiplikation der zu codierenden Symbole mit einem Normalisierungsfaktor umfasst.

**5.** Verfahren nach einem der Ansprüche 1 bis 4, bei dem die zu codierenden Symbole M-äre Phasenumtastsymbole sind, worin M eine ganze Zahl größer als eins ist.

**6.** Differenzieller Raum-Zeit-Block-Codierer mit:

einem Raum-Zeit-Block-Codierer (40), der auf zu codierende Symbole anspricht, um aufeinanderfolgende Raum-Zeit-Codierte Blöcke zu erzeugen;

einem Matrix-Multiplizierer (42) mit einem ersten Eingang für die aufeinanderfolgenden Raum-Zeit-codierten Blöcke, einem zweiten Eingang und einem Ausgang, der differenziell codierte Raum-Zeit-Blöcke liefert; und

einer Verzögerungseinheit (44) zur Lieferung jedes differenziell codierten Raum-Zeit-Blockes von dem Ausgang des Matrix-Multiplizierers an den zweiten Eingang des Matrix-Multiplizierers mit einer Verzögerung von einem Raum-Zeit-Block;

wobei der Matrix-Multiplizierer (42) jeden Raum-Zeit-codierten Block mit einem unmittelbar vorhergehenden differenziell codierten Raum-Zeit-Block multipliziert, um einen laufenden differenziell codierten Raum-Zeit-Block zu erzeugen.

7. Codierer nach Anspruch 6, bei dem der Raum-Zeit-Block-Codierer (40) so angeordnet ist, dass er jeden Raum-Zeit-codierten Block mit zwei Symbolen in aufeinanderfolgenden Symbol-Intervallen auf jedem von zwei Pfaden als Antwort auf zwei zu codierende Symbole erzeugt.

8. Codierer nach Anspruch 6, bei dem der Raum-Zeit-Block-Codierer (40) so angeordnet ist, dass er jeden Raum-Zeit-codierten Block mit vier Symbolen in aufeinanderfolgenden Symbol-Intervallen auf jeden von vier Pfaden als Antwort auf drei zu codierende Symbole erzeugt.

9. Codierer nach einem der Ansprüche 6 bis 8, bei dem der Raum-Zeit-Block-Codierer (40) so angeordnet ist, dass er die zu codierenden Symbole mit einem Normalisierungsfaktor multipliziert.

10. Codierer nach einem der Ansprüche 6 bis 9, der weiterhin eine M-äre Phasenumtastfunktion (12) umfasst, worin M eine ganze Zahl größer als eins ist, und die so angeordnet ist, dass die zu codierenden Symbole erzeugt werden.

11. Verfahren zur Decodierung von Symbolen, die in jeweiligen Symbol-Intervallen als Antwort auf die Aussendung von T Antennen von differenziell codierten Raum-Zeit-Blöcken empfangen werden, die durch das Verfahren nach Anspruch 1 erzeugt werden, mit den folgenden Schritten:

Liefern (54) von T empfangenen Symbolen jedes codierten Raum-Zeit-Blockes; und
Erzeugen (58) von decodierten Symbolen $\hat{X}_i$ gemäß:

$$Y_i = kH_x(\hat{X}_i)\, Y_{i-1}$$

worin $Y_i$ ein Vektor von T Symbolen eines laufenden codierten Raum-Zeit-Blockes i ist, $Y_{i-1}$, ein Vektor mit T Symbolen eines unmittelbar vorhergehenden codierten Raum-Zeit-Blockes $i$-1 ist, i eine ganze Zahl ist, k eine Skalierungs-Konstante ist, und $H_x$ die orthogonale T mal T Raum-Zeit-Block-Codierungs-Matrix ist.

12. Verfahren nach Anspruch 11, bei dem $T$=2 ist, $y_{1,i}$ und $y_{2,i}$ empfangene Symbole des codierten Raum-Zeit-Blockes i sind, und der Schritt der Erzeugung der decodierten Symbole $\hat{X}_i$ die Multiplikation (58) einer Matrix

$$H\left(y_{1,i-1}, y_{2,i-1}\right)' = \begin{bmatrix} y_{1,i-1}{}^{\star} & -y_{2,i-1} \\ y_{2,i-1}{}^{\star} & y_{1,i-1} \end{bmatrix} \quad \text{mit einem Vektor} \quad \tilde{Y}_i \begin{bmatrix} y_{1,i} \\ -y_{2,i}{}^{\star} \end{bmatrix}$$

umfasst.

13. Decodierer zur Decodierung von Symbolen, die in jeweiligen Symbol-Intervallen als Antwort auf die Aussendung von differenziell codierten Raum-Zeit-Block empfangen werden, die durch den Codierer nach Anspruch 6 erzeugt werden, mit:

Einrichtungen (50) zur Lieferung empfangener Symbole jedes codierten Raum-Zeit-Blockes i, die durch einen Vektor $Y_i$ dargestellt sind;
eine Verzögerungseinheit (52) zur Lieferung einer Verzögerung von einem Raum-Zeit-Block zur Lieferung von empfangenen Symbolen eines unmittelbar vorhergehenden codierten Raum-Zeit-Blockes $i$-1, der durch einen Vektor $Y_{i-1}$ dargestellt ist; und
Einrichtungen (54, 58) zur Erzeugung decodierter Symbole $\hat{X}_i$ gemäß einer Gleichung:

$$Y_i = kH_x(\hat{X}_i)\, Y_{i-1}$$

worin k eine Skalierungs-Konstante ist und $H_x$ eine orthogonale Matrix ist, die die Raum-Zeit-Block-Codierung durch den Codierer darstellt.

14. Decodierer nach Anspruch 13, bei dem die Einrichtung zur Erzeugung der decodierten Symbole $\hat{X}_i$ einen Multiplizierer (58) umfasst, der zur Multiplikation einer Matrix $\begin{bmatrix} y_{1,i-1}{}^\star & -y_{2,i-1} \\ y_{2,i-1}{}^\star & y_{1,i-1} \end{bmatrix}$ mit einem Vektor $\begin{bmatrix} y_{1,i} \\ -y_{2,i}{}^\star \end{bmatrix}$ umfasst, worin $y_{1,i}$ und $y_{2,i}$ die empfangenen Symbole des codierten Raum-Zeit-Blockes i sind.

**Revendications**

1. Procédé de codage différentiel de blocs spatio-temporels, comprenant les étapes consistant à :

   (40) produire, à partir de symboles devant être codés, des blocs spatio-temporels successifs $H_x(X_i)$ de T symboles chacun à des intervalles de symboles successifs sur chacune des T trajectoires selon une matrice $H_x$, orthogonale T par T où T est un entier supérieur à un, $X_i$ représente les symboles devant être codés dans un bloc spatio-temporel, et i est un entier identifiant chaque bloc spatio-temporel ;
   (42) produire des blocs de sortie spatio-temporels $H_{z,i}$, codés de façon différentielle de T symboles chacun à des intervalles de symboles successifs sur chacune des T trajectoires de sortie ; et
   (44) retarder les blocs de sortie spatio-temporels codés de façon différentielle $H_{z,i}$ pour produire des blocs retardés respectifs $H_{z,i-1}$;

   chaque bloc de sortie spatio-temporel codé de façon différentielle $H_{z,i}$ étant produit par multiplication matricielle (42) du bloc $H_x(X_i)$ par le bloc retardé $H_{z,i-1}$.

2. Procédé selon la revendication 1, dans lequel T = 2 et deux symboles sont codés dans chaque bloc spatio-temporel.

3. Procédé selon la revendication 1, dans lequel T = 4 et trois symboles sont codés dans chaque bloc spatio-temporel.

4. Procédé selon l'une quelconque des revendications 1 à 3, dans lequel l'étape consistant à (42) produire les blocs spatio-temporels successifs $H_x(X_i)$ comprend une multiplication des symboles devant être codés par un facteur de normalisation.

5. Procédé selon l'une quelconque des revendications 1 à 4, dans lequel les symboles devant être codés comprennent des symboles de transmission par déplacement de phase à base M, où M est un entier supérieur à un.

6. Codeur différentiel de blocs spatio-temporels comprenant :

   un codeur de blocs spatio-temporels (40) réagissant à des symboles devant être codés pour produire des blocs codés spatio-temporels successifs ;
   un multiplicateur matriciel (42) ayant une première entrée pour lesdits blocs codés spatio-temporels successifs, une seconde entrée et une sortie fournissant des blocs spatio-temporels codés de façon différentielle ; et
   une unité de retard (44) pour fournir chaque bloc spatio-temporel codé de façon différentielle de la sortie du multiplicateur matriciel à la seconde entrée du multiplicateur matriciel avec un retard d'un bloc spatio-temporel ;
   le multiplicateur matriciel (42) multipliant chaque bloc codé spatio-temporel par un bloc spatio-temporel codé de façon différentielle immédiatement précédent pour produire un bloc spatio-temporel actuel codé de façon différentielle.

7. Codeur selon la revendication 6, dans lequel le codeur de blocs spatio-temporels (40) est conçu pour produire chaque bloc codé spatio-temporel avec deux symboles à des intervalles de symboles successifs sur chacune des deux trajectoires, en réponse aux deux symboles devant être codés.

8. Codeur selon la revendication 6, dans lequel le codeur de blocs spatio-temporels (40) est conçu pour produire chaque bloc codé spatio-temporel avec quatre symboles à des intervalles de symboles successifs sur chacune des quatre trajectoires, en réponse aux trois symboles devant être codés.

**9.** Codeur selon l'une quelconque des revendications 6 à 8, dans lequel le codeur de blocs spatio-temporels (40) est conçu pour multiplier les symboles devant être codés par un facteur de normalisation.

**10.** Codeur selon l'une quelconque des revendications 6 à 9 et comprenant en outre une fonction de transmission par déplacement de phase de code M (12), où M est un entier supérieur à un, conçu pour produire les symboles devant être codés.

**11.** Procédé de décodage de symboles reçus à des intervalles de symboles respectifs en réponse à la transmission à partir de T antennes de blocs spatio-temporels codés de façon différentielle produits par le procédé de la revendication 1, comprenant les étapes consistant à :

(54) fournir les T symboles reçus de chaque bloc spatio-temporel codé ; et (58) produire des symboles décodés $\hat{X}_i$ selon :

$$Y_i = k H_x(\hat{X}_i) Y_{i-1}$$

où $Y_i$ est un vecteur de T symboles d'un bloc spatio-temporel codé actuel i, $Y_{i-1}$ est un vecteur de T symboles d'un bloc spatio-temporel codé immédiatement précédent i-1, i est un entier, k est une constante de mise à l'échelle, et $H_x$ est la matrice de codage de blocs spatio-temporels orthogonale T par T.

**12.** Procédé selon la revendication 11, dans lequel T = 2, $Y_{1,i}$ et $Y_{2,i}$ sont des symboles reçus du bloc spatio-temporel codé i, et l'étape de production des symboles décodés $\hat{X}_i$ comprend le multiplexage (58) d'une matrice

$$H(Y_{1,i-1}, Y_{2,i-1})' = \begin{bmatrix} y_{1,i-1}{}^* & -y_{2,i-1} \\ y_{2,i-1}{}^* & y_{1,i-1} \end{bmatrix} \text{ par un vecteur } \tilde{Y}_i = \begin{bmatrix} y_{1,i} \\ -y_{2,i}{}^* \end{bmatrix} .$$

**13.** Décodeur pour décoder des symboles reçus à des intervalles de symboles respectifs en réponse à la transmission de blocs spatio-temporels codés de façon différentielle produits par le codeur de la revendication 6, comprenant :

des moyens (50) pour fournir les symboles reçus de chaque bloc spatio-temporel codé i représenté par un vecteur $Y_i$ ;
une unité de retard (52) pour fournir un retard d'un bloc spatio-temporel pour fournir les symboles reçus d'un bloc spatio-temporel codé immédiatement précédent i-1 représenté par un vecteur $Y_{i-1}$; et
des moyens (54, 58) pour produire des symboles décodés $\hat{X}_i$ selon une équation

$$Y_i = k H_x(\hat{X}_i) Y_{i-1}$$

où k est une constante de mise à l'échelle et $H_x$ est une matrice orthogonale représentant le codage de blocs spatio-temporels par le codeur.

**14.** Décodeur selon la revendication 13, dans lequel les moyens pour produire les symboles décodés $\hat{X}_i$ comprennent

un multiplicateur (58) conçu pour multiplier une matrice $\begin{bmatrix} y_{1,i-1}{}^* & -y_{2,i-1} \\ y_{2,i-1}{}^* & y_{1,i-1} \end{bmatrix}$ par un vecteur, $\begin{bmatrix} y_{1,i} \\ -y_{2,i}{}^* \end{bmatrix}$, où $y_{1,i}$ et $y_{2,i}$ sont les symboles du bloc spatio-temporel codé i.

FIG. 1    PRIOR ART

FIG. 2    PRIOR ART

FIG. 3    PRIOR ART

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. M. ALAMOUTI.** A Simple Transmit Diversity Technique for Wireless Communications. *IEEE Journal on Selected Areas in Communications,* October 1998, vol. 16 (8), 1451-1458
- **V. TAROKH et al.** New Detection Schemes for Transmit Diversity with no Channel Estimation. *IEEE International Conference on Universal Personal Communications,* 1998
- **V. TAROKH et al.** A Differential Detection Scheme for Transmit Diversity. *IEEE Journal on Selected Areas in Communications,* July 2000, vol. 18 (7), 1169-1174
- Codes for differential signalling with many antennas. **HASSIBI B et al.** Proceedings of the 2000 IEEE Conference on Wireless Communications and Networking. 2000, vol. 1, 23-24

- Differential unitary space-time modulation. **HOCHWALD B M et al.** IEEE Transactions on Communications. December 2000, vol. 48, 2041-2052
- **HOCHWALD B M et al.** Differential unitary space-time modulation
- **TAROKH et al.** *New Detection Schemes for Transmit Diversity with no Channel Estimation*
- **G. BAUCH.** Concatenation of Space-Time Block Codes and ''Turbo''-TCM. *Proceedings of the International Conference on Communications, ICC'99,* June 1999, 1202-1206